Europäisches Patentamt

European Patent Office

Office européen des brevets

(11) Numéro de publication: **0 241 333**
**A1**

## (12) DEMANDE DE BREVET EUROPEEN

(21) Numéro de dépôt: **87400590.3**

(22) Date de dépôt: **17.03.87**

(51) Int. Cl.⁴: **F 16 L 59/02**
F 16 L 59/08, B 64 G 1/58

(30) Priorité: **21.03.86 FR 8604105**

(43) Date de publication de la demande:
**14.10.87 Bulletin 87/42**

(84) Etats contractants désignés: **AT DE FR IT NL**

(71) Demandeur: **BRONZAVIA-AIR EQUIPEMENT
207, bld St Denis
F-92400 Courbevoie (FR)**

(72) Inventeur: **Dieul, Jean-Henri
THOMSON-CSF SCPI 19, avenue de Messine
F-75008 Paris (FR)**

(74) Mandataire: **Grynwald, Albert et al
THOMSON-CSF SCPI 19, avenue de Messine
F-75008 Paris (FR)**

(54) Cloison d'isolation thermique et son application à la réalisation d'un dispositif d'isolation thermique.

(57) L'invention est relative à une cloison d'isolation thermique, constituée d'une superposition de couches de matériaux contribuant à limiter la transmission de chaleur.

Elle est caractérisée en ce qu'au moins l'une desdites couches (C1,C2,C3) de matériau est conductrice de la chaleur dans les directions parallèles au plan principal de la cloison et est ralentisseur thermique dans les directions perpendiculaires audit plan principal.

Application : isolation thermique de structures transmettant une température non homogène sur leur surface opposée à une source de chaleur.

FIG_1

## Description

## CLOISON D'ISOLATION THERMIQUE ET SON APPLICATION A LA REALISATION D'UN DISPOSITIF D'ISOLATION THERMIQUE.

L'invention est relative à une cloison d'isolation thermique comprenant au moins une couche de matériau pour limiter la convection thermique et à son application à la réalisation d'un dispositif d'isolation thermique tel que par exemple, un bouclier thermique.

La cloison de l'invention et le dispositif qu'elle permet de réaliser sont appelés à être utilisés pour l'isolation ou la protection thermique dans le domaine des hautes températures, c'est-à-dire des températures de 700°C au moins.

On utilise des dispositifs d'isolation thermique, encore appelés boucliers thermiques dans de nombreux domaines, par exemple dans l'industrie dès lors que des sources de chaleur à haute température présentent un risque pour l'environnement. On utilise également des boucliers thermiques dans le domaine aéronautique pour isoler les parties chaudes d'un réacteur du reste de l'aéronef, ou bien encore dans les véhicules d'exploration spatiale pour les protéger lors des rentrées dans l'atmosphère.

Un dispositif d'isolation thermique doit être fiable et efficace, et, dès lors qu'il est embarqué à bord d'un véhicule, doit être le plus léger possible pour que le rendement du moteur ne soit pas affecté par sa présence et le poids supplémentaire qu'il entraîne.

On connaît des dispositifs d'isolation thermique constitués à l'aide de matériaux réfractaires qui, selon leur densification, arrêtent plus ou moins la transmission du rayonnement calorifique. Ces dispositif présentent l'inconvénient d'être d'autant plus lourds et encombrants qu'ils sont efficaces.

D'autres dispositifs constitués à partir d'au moins un matériau isolant, de faible densité et en forme de nappes et d'écrans réfléchissants, satisfont généralement aux conditions de poids requises dans des véhicules, mais présentent encore des inconvénients. En effet, il peut arriver qu'une partie de la surface de l'écran soit soumise à des températures plus élevées que d'autres et que l'écran laisse passer une certaine quantité de chaleur en ces endroits de sa surface à température plus élevée alors qu'il fonctionne correctement en d'autres endroits, en raison du gradient de température qui se crée dans toutes les directions au travers du matériau.

Afin d'améliorer le rendement des dispositifs comprenant de tels écrans, il est connu de réaliser des cloisons comportant une superposition d'écrans réfléchissants et de couches de matériaux isolants. Les écrans ont pour rôle de réfléchir le rayonnement infra-rouge et les couches de matériaux isolants limitent la transmission de chaleur par convection au-delà des écrans. Les matériaux isolants sont généralement à base de laine minérale ou organique ou de produits ayant des propriétés proches.

Cependant, si la chaleur émise localement est trop élevée, il peut arriver que l'écran réfléchissant se détruise et qu'une couche de matériau isolant de la convection, intercalée entre cet écran et un autre soit insuffisante et finisse par laisser le rayonnement et de ce fait la chaleur de façon exagérée.

L'invention a donc pour but de remédier à ces inconvénients en permettant la réalisation d'une cloison d'isolation thermique qui soit légère, et dont les possibilités d'isolation soient exploitées au maximum sur l'ensemble de la surface.

Selon l'invention, une cloison d'isolation thermique constituée d'une superposition de couches de matériaux contribuant à limiter la transmission de chaleur, est caractérisée en ce qu'au moins l'une desdites couches de matériaux est conducteur thermique dans les directions parallèles au plan principal de la cloison et est ralentisseur thermique dans les directions perpendiculaires audit plan principal.

Selon une autre caractéristique, ladite couche de matériau est à proximité de la face de la cloison en regard de la source de chaleur.

La structure de cette couche de matériau est particulièrement intéressante dans le cas où la température reçue par la face de la cloison exposée à la source de chaleur n'est pas homogène. En effet cette couche de matériau peut être décomposée en sous-couches élémentaires et, sa bonne conductivité dans les plans parallèles au plan principal de la cloisin permet d'homogénéiser la température dans chacune des sous-couches. De plus, étant donné que la structure de cette couche de matériau est ralentisseur thermique dans les directions perpendiculaires au plan principal, la température des sous-couches les plus éloignées de la source de chaleur est inférieure à la température de celles qui en soit plus proches, car la température dans la cloison décroît de manière régulière au fur et à mesure que le flux de chaleur se propage au travers.

En outre, dès que le flux de chaleur rencontre la première couche de matériau, la température s'homogénéise sur la totalité de la surface de cette couche à une valeur comprise entre la température maximale et la température minimale reçues de la source. Ainsi, dès que le flux de chaleur rencontre le matériau il se produit un abaissement de température.

L'un des intérêts essentiels de l'invention réside dans le fait que si on place un isolant classique à proximité de la face de la couche où la température est homogène, ledit isolant sert simplement à stopper l'excès de chaleur qui est parvenu à traverser ladite couche, en étant sollicité en toutes parts de façon homogène.

Selon les conditions d'ambiance auxquelles est soumise une cloison réalisée avec une telle couche de matériau, il peut être nécessaire de disposer plusieurs couches successives dudit matériau séparées par des écrans appropriés afin de parvenir à une homogénéisation correcte de la température.

D'autres caractéristiques et avantages de l'invention apparaîtront avec la description de quelques modes de réalisation faite en regard des figures annexées sur lesquelles:

- la figure 1 est une vue en perspective d'un mode de réalisation du matériau conducteur thermique dans les directions paral lèles au plan principal de la cloison et ralentisseur thermique en direction perpendiculaire audit plan principal;

- la figure 2 est une vue de dessus du matériau de la figure 1;

- la figure 3 est une vue latérale de la figure 1;

- la figure 4 est une perspective d'une cloison d'isolation réalisée avec le matériau des figures 1 à 3;

- la figure 5 est une variante de réalisation de la cloison réalisée avec le matériau des figures 1 à 3;

- les figures 6 et 7 sont des vues de dispositifs d'isolation thermique mettant en oeuvre une cloison employant le matériau conducteur dans les directions parallèles à son plan principal et ralentisseur thermique dans les directions perpendiculaires audit plan principal.

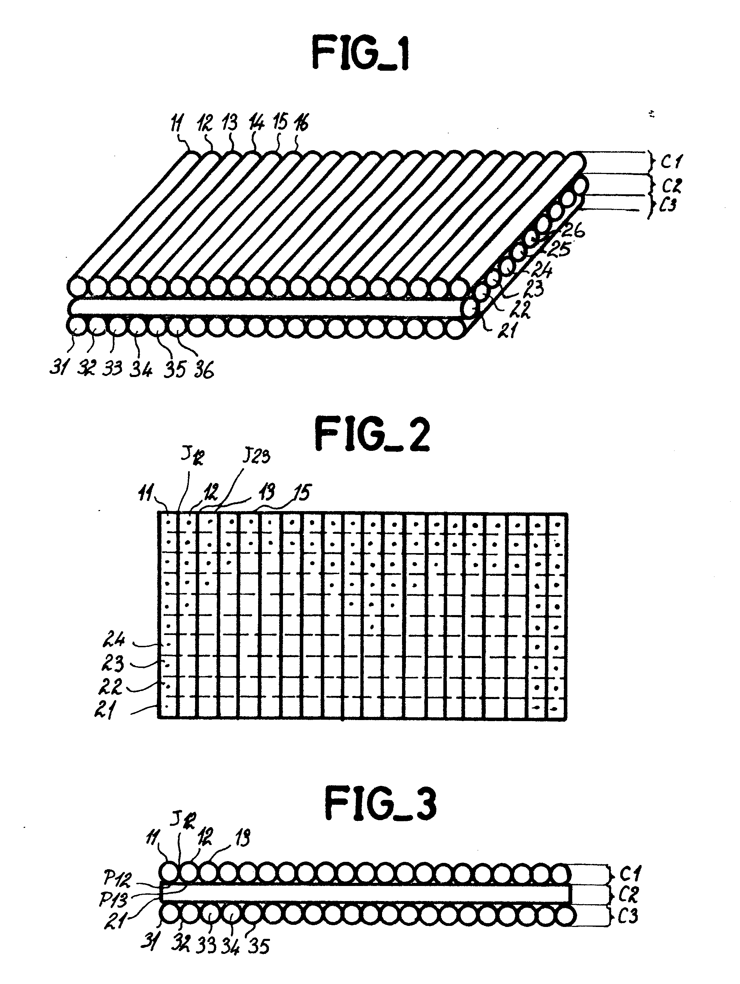

Sur les figures 1 à 3, on a représenté sous diverses vues, un mode de réalisation possible et préféré du matériau permettant d'obtenir une température homogène sur l'une de ses faces lorsque l'autre face n'est pas soumise à une température homogène.

Ce matériau possède, dans le mode de réalisation préféré, la structure d'un feutre ayant une épaisseur faible par rapport à ses deux autres dimensions. Ce feutre est isolant dans son épaisseur, alors qu'il est conducteur dans les plans perpendiculaires à ladite épaisseur.

Pour que le feutre ait la possibilité d'isoler dans certains de ses plans et de conduire dans d'autres, il est constitué à l'aide d'au moins deux couches élémentaires C1, C2, C3 réalisées avec des fibres en matériau conducteur. Une bonne conduction est assurée entre les fibres d'une même couche élémentaire, alors qu'un ralentissement est réalisé entre les fibres de deux couches élémentaires différentes. Pour cela, les fibres d'une même couche élémentaire sont en contact deux à deux au moins sur une grande surface, afin que la transmission de chaleur puisse s'effectuer d'une fibre à l'autre, alors que les surfaces de contact entre les fibres de deux couches élémentaires différentes sont réduites au minimum, pour que la transmission de chaleur soit le plus possible réduite.

Dans un mode de réalisation, le matériau représenté sur les figures 1 à 3 est constitué de trois couches élémentaires C1,C2,C3 de fibres en matériau conducteur. Chacune des fibres des différentes couches élémentaires possède une section à peu près circulaire, et est donc assimilable à un cylindre. Les fibres d'une même couche sont en grande majorité parallèles entre elles et au contact sur leur longueur, et les fibres de deux couches élémentaires superposées sont par exemple perpendiculaires entre elles de façon à ce qu'un simple point de contact existe entre deux fibres de deux couches voisines.

Sur les figures 1 à 3, on constate que les fibres 11,12,13,14, 15,16,etc, de la couche C1 sont au contact l'une de l'autre, deux à deux par des jonctions J12,J23 tangentielles, de même que les fibres 21,22,23,24,25,26,etc, de la couche C2 ou que les fibres31,32,33,34, 35,36,etc, de la couche C3 alors que de simples points P12,P13 de tangence apparaissent entre deux fibres adjacentes appartenant à deux couches différentes.

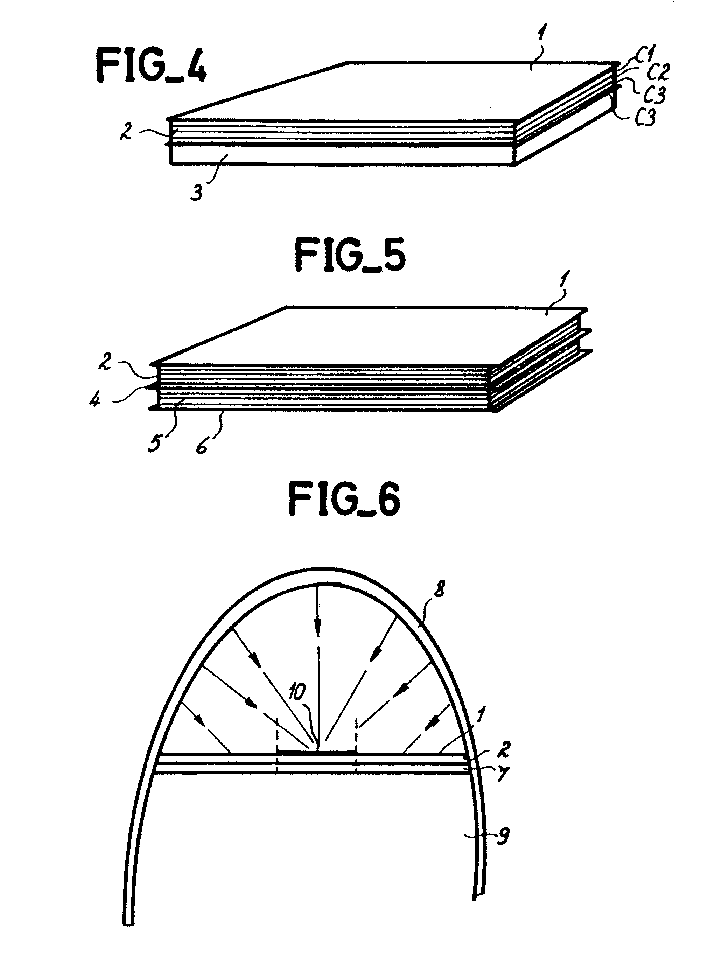

La figure 4 représente un premier type de cloison d'isolation thermique qu'il est possible de réaliser avec le matériau décrit en regard des figures 1 à 3.

Une telle cloison comporte un écran 1 en matériau réfléchissant, en superposition sur une couche 2 de matériau bon conducteur dans le plan parallèle au plan principal de l'écran et ralentisseur dans les plans perpendiculaires au plan principal de l'écran, elle-même superposée à une couche 3 de matériau isolant. L'écran 1 réfléchissant est par exemple constitué à l'aide d'une feuille en matériau réfléchissant ou une feuille d'un matériau support revêtue d'un matériau réfléchissant tel que de l'or, du platine, du palladium, du bérylium ou tout autre matériau adapté à la gamme de fréquences infrarouges à réfléchir.

Dans une variante, un écran est constitué par une superposition de matériaux différents, ce qui permet de réfléchir une plus large bande de fréquences de rayonnement.

Dans l'exemple représenté, la couche 2 de matériau pour réaliser l'homogénéisation de température est constituée de quatre couches élémentaires C1, C2, C3, C4 en fibres conductrices disposées selon l'agencement montré sur les figures 1 à 3, ou selon un agencement permettant d'obtenir le même résultat.

La couche 3 en matériau isolant a pour objet de ralentir la convection au-delà du matériau d'homogénéisation de la température.

La figure 5 représente une variante de réalisation d'une cloison utilisant un matériau pour homogénéiser la température confome à l'invention.

Cette cloisin est réalisée en plaçant en alternance des écrans en matériaux réfléchissants et du matériau pour homogénéiser la température. Les deux faces extrêmes 1,6 de la cloison sont des écrans en matériaux réfléchissants et, dans l'exemple, on trouve entre ces deux écrans deux couches 2, 5 de matériaux pour homogénéiser la température séparées par un autre écran 4 en matériau réfléchissant.

Cette solution est plus particulièrement adaptée lorsque le rayonnement incident reçu par la cloison se situe dans une plage de fréquences élevées, c'est-à-dire lorsque le gradient de température reçu par la cloison est élevé.

D'autres variantes de réalisation non représentées sur les figures sont possibles.

Ainsi, il est possible de réaliser une cloison dont les deux faces extrêmes sont constituées à l'aide d'écrans réfléchissants avec plusieurs couches de matériaux isolants classiques intercalées et séparées par d'autres écrans réfléchissants et, au contact de l'écran destiné à être mis en regard de la source de chaleur, au moins une couche de matériau pour homogénéiser la température.

Dans un mode de réalisation, les fibres conductrices constituant le matériau pour homogénéiser la température sont des fibres de carbone qui peuvent être utilisées jusqu'à une température proche de 1200°C.

Dans une variante, les fibres conductrices sont à base de carbure de silicium et la température d'utilisation maximale est supérieure à 1200°C.

La figure 6 montre une utilisation particulièrement intéressante d'une cloison comportant au moins une couche de matériau pour homogénéiser la température.

La cloison comporte par exemple un écran 1 en matériau réfléchissant, une couche 2 de matériau pour homogénéiser la température et une couche 7 de matériau isolant classique.

Il est bien entendu que la cloison peut être constituée de toute autre manière, et notamment, par une simple superposition de couches de matériaux pour homogénéiser la température, ou bien encore peut comporter des couches de matériaux divers séparées ou non par des écrans réflecteurs. La seule condition nécessaire est qu'au moins une couche de matériau pour homogénéiser la température se trouve en regard de la source de chaleur.

Cette cloison est utilisée pour isoler deux zones d'une structure possédant une forme particulière.

Plus précisément cette structure comporte une paroi 8 de forme non plane ou concave exposée à la source de chaleur ou bien encore portée à une température élevée.

La cloison est intercalée entre la paroi et une zone 9 de la pièce qu'il est nécessaire de maintenir à une température basse.

La structure considérée peut être une aile d'aéronef, ou bien encore un fuselage d'aéronef dans lequel la paroi 8 est un bord d'attaque qui, en raison des frottements est porté à une température élevée. Il peut par exemple s'agir d'un engin spatial dans lequel la paroi 8 subit des frottements lors d'une rentrée dans l'atmosphère, qui la partent à une température extrèmement élevée. La partie 9 à isoler peut être un habitacle ou la zone d'une aile comprise entre l'intrados et l'extrados. Cette zone peut donc comporter des organes sensibles tels que des tiges ou cables de commande d'ailerons ou bien encore peut renfermer du carburant.

D'une façon plus générale la structure à protéger comporte une paroi 8 de forme non plane et une zone 9 placée au-delà de cette paroi qu'il convient de maintenir à une température plus basse.

Lorsque la paroi est portée à une température élevée, par contact direct avec une source de chaleur ou par rayonnement ou par frottement, cette paroi 8 réémet sur sa face opposée à la source de chaleur un rayonnement calorifique normal à ladite face et représenté par les flèches sur la figure. On constate grâce à ces flèches, qu'en certains endroits de la zone au-delà de la paroi 8, le rayonnement réémis converge en raison de la forme de ladite paroi, et il se trouve donc des zones de la cloison où la chaleur reçue est plus élevée, en particulier les zones centrales 10 alors que les zones latérales sont à une température plus basse, lorsque la paroi 8 est de forme arrondie, sphérique ou paraboloïdale.

En intercalant cette cloison comportant un matériau pour homogénéiser la température, on constate qu'une partie 10 de la face de la cloison en regard de la source de chaleur est soumise instantanément à une température plus élevée. Cependant en raison de la présence de la couche 2 de matériau pour homogénéiser la température placée à proximité de cette face de la cloison, il se produit immédiatement un abaissement moyen de la température dès la rencontre du flux de chaleur avec la première couche élémentaire de ce matériau.

Il n'existe donc plus de surchauffe localisée en une partie quelconque de la cloison. L'emploi d'une cloison d'isolation de l'art antérieur aurait obligé à renforcer le pouvoir d'isolation dans sa zone 10 centrale pour limiter la transmission de chaleur importante en cette zone. Ceci aurait impliqué en cette zone l'emploi de matériaux ayant une capacité d'isolation calorifique plus importante que le matériau employé dans la présente invention, ce qui se serait traduit par un supplément de poids et de coût.

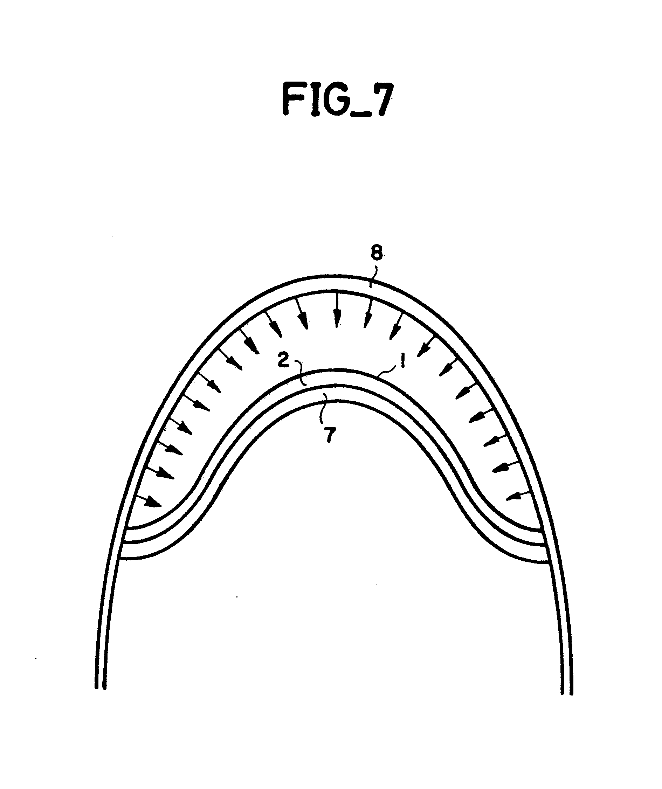

Sur la figure 7, on envisage le cas où la cloison épouse la forme de la structure 8 à isoler. La cloison comporte par exemple un écran 1 réflecteur, une couche 2 de matériau conducteur dans un plan et ralentisseur dans l'autre et une couche 7 d'isolant classique. Cette disposition peut être utilisée lorsque la structure 8 à isoler n'est pas à température homogène, car dans ce cas, la cloison, placée à proximitée immédiate de la structure 8, à l'opposé de la source de chaleur par rapport à la structure, est directement soumise à une température non homogène et remplit son rôle d'homogénéisation. La structure 8 peut être également, comme dans le cas de la figure 6, une simple paroi intercalée entre une source de chaleur et la cloison.

**Revendications**

1. Cloison d'isolation thermique constituée d'une superposition de couches de matériaux contribuant à limiter la transmission de chaleur, caractérisée en ce qu'au moins l'une desdites couches (C1, C2, C3) de matériau est conductrice de la chaleur dans les directions parallèles au plan principal de la cloisin et est ralentisseur thermique dans les directions perpendiculaires audit plan principal.

2. Cloison selon la revendication 1, caractérisée en ce que ladite couche (C1, C2, C3) de matériau est à proximité de la face (1) de la cloison en regard de la source de chaleur.

3. Cloison selon la revendication 2, caractérisée en ce que ladite couche de matériau est constituée dans un feutre dont les fibres (11, 12, ..., 35, 36) sont conductrices de la chaleur.

4. Cloison selon la revendication 3, caractérisée en ce que le feutre comporte au moins deux couches (C1, C2, C3) élémentaires de fibres superposées.

5. Cloison selon la revendication 4, caractérisée en ce que les fibres (11,12,13 ; 21,22,23 ; 31,32,33) d'une même couche (C1 ; C2 ; C3) sont en très forte proportion parallèles entre elles et au contact l'une de l'autre deux à deux sur leur longueur, alors que les fibres de deux couches superposées sont disposées de façon à ce que leurs zones de contact soient réduites, pour limiter la transmission de chaleur.

6. Cloison selon la revendication 5, caractérisée en ce que les fibres (11, 12, 13 ; 21, 22, 23 ; 31 , 32, 33) de deux couches superposées sont perpendiculaires entre elles de façon à ce que la zone de contact entre deux fibres superposées soit réduite à un point (P12, P13).

7. Cloison selon l'une quelconque des revendications 1 à 6, caractérisée en ce que le matériau constitutif des fibres est à base de carbone.

8. Cloisin selon l'une quelconque des revendications 1 à 7, caractérisée en ce que le matériau constitutif des fibres est à base de carbure de silicium.

9. Cloisin selon l'une quelconque des revendications 1 à 8 précédentes, caractérisée en ce qu'elle comporte sur sa face destinée à être en regard de la source de chaleur au moins une couche (1) de matériau réflecteur, et en ce que les couches (C1,C2,C3) élémentaires de fibres conductrices sont disposées immédiatement au contact de cet écran (1) réflecteur.

10. Cloison selon la revendication 9, caractérisée en ce qu'elle comporte en alternance une superposition d'écrans réflecteurs(1,4,6) et de couches (2,5) en matériaux conducteurs de la chaleur dans les directions à forte proportion parallèles au plan des écrans, et ralentisseurs thermiques dans les directions perpendiculaires aux plans desdits écrans.

11. Cloison selon l'une quelconque des revendications 1 à 9, caractérisée en ce qu'elle comporte au moins une couche (2) de matériau conducteur de la chaleur dans l'un de ses plans et ralentisseur dans les autres, en superposition sur au moins une couche de matériau (3) isolant classique.

12. Cloison selon la revendication 11, caractérisée en ce que des écrans (1) en matériaux réflecteurs sont intercalés entre les différentes couches de matériaux isolants.

13. Cloison selon l'une quelconque des revendications 1 à 12 précédentes, caractérisée en ce qu'un écran réflecteur est constitué dans un matériau précieux réfléchissant choisi parmi l'or, le platine.

14. Cloison selon l'une quelconque des revendications 1 à 12 précédentes, caractérisée en ce qu'un écran réflecteur est à base de bérylium.

15. Cloison selon l'une quelconque des revendications 1 à 14 précédentes, caractérisée en ce qu'un écran réflecteur est constitué par une superposition de matériaux réfléchissants.

16. Dispositif d'isolation thermique caractérisé en ce qu'il comporte une cloison selon l'une quelconque des revendications 1 à 15, placée à l'opposé d'une source de chaleur, derrière une structure(8) telle qu'une paroi.

17. Dispositif d'isolation thermique selon la revendication 16, caractérisé en ce que la cloison, de forme plane, est disposée derrière une structure (8) de forme concave proche de la source de chaleur.

18. Dispositif d'isolation thermique selon la revendication 16, caractérisé en ce que la cloison épouse la forme de la structure (8) proche de la source de chaleur.

0241333

FIG_1

FIG_2

FIG_3

**FIG_4**

1

C1
C2
C3
C3

2

3

**FIG_5**

1

2

4

5    6

**FIG_6**

8

10

1

2

7

9

# FIG_7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 565 740  (J.L. LAZAR et al.) <br> * Figures 1-3; colonne 1, ligne 65 - colonne 2, ligne 3; revendications 12-13 * | 1-5,7 | F 16 L   59/02 <br> F 16 L   59/08 <br> B 64 G    1/58 |
| | --- | | |
| X | FR-A-1 124 717  (BRONZAVIA) <br> * Figure; résumé * | 1,9 | |
| A | | 10-12 | |
| | --- | | |
| A | US-A-1 771 216  (O. GOSSLER) <br> * Figures 1-2; revendications * | 1-6 | |
| | ----- | | |

### DOMAINES TECHNIQUES RECHERCHES (Int. Cl.4)

F 16 L
B 64 G

Le présent rapport de recherche a été établi pour toutes les revendications

| Lieu de la recherche | Date d'achèvement de la recherche | Examinateur |
|---|---|---|
| LA HAYE | 18-06-1987 | NARMINIO A. |